# EUROPÄISCHE PATENTSCHRIFT

(11) **EP 0 504 209 B1**
(45) Veröffentlichungstag und Bekanntmachung des Hinweises auf die Patenterteilung: **03.07.1996**
(21) Anmeldenummer: 91900212.1
(22) Anmeldetag: 04.12.1990
(51) Int. Cl.: H04N 5/12

(54) **SCHALTUNGSANORDNUNG ZUM ERKENNEN EINES FERNSEHSIGNALS**
CIRCUIT ARRANGEMENT FOR DETECTING A TV SIGNAL
CIRCUIT DE DETECTION DE SIGNAUX DE TELEVISION

(30) Priorität: 11.12.1989 DE 3940860
(43) Veröffentlichungstag der Anmeldung: 23.09.1992
(73) Patentinhaber: Deutsche Thomson-Brandt GmbH, D-78003 Villingen-Schwenningen (DE)
(72) Erfinder: LENZ, Kuno, D-7730 Villingen-Schwenningen (DE); KOBLITZ, Rudolf, D-7730 Villingen-Schwenningen (DE)
(86) Internationale Anmeldenummer: EP9002085
(87) Internationale Veröffentlichungsnummer: WO9109492

(56) Entgegenhaltungen:
- US-A- 4 677 484
- IEEE Transactions on Consumer Electronics, Band 35, Nr. 3, August 1989, IEEE, Y. Baba et al.: "A new multistandard video processor including deflection drive circuits which is controlled by digital process", Seiten 308-313

## Beschreibung

Die Erfindung betrifft eine Schaltungsanordnung zum Erkennen eines Fernsehsignals in einem Fernsehempfänger, wobei ein horizontalfrequentes Rechtecksignal in Frequenz und Phase mit Hilfe einer PLL-Schaltung auf das Fernsehsignal synchronisiert wird. Eine Integratorstufe wird dabei in Abhängigkeit von der Koinzidenz der Synchronimpulse des Fernsehsignals mit dem horizontalfrequenten Rechtecksignal von Konstantstromquellen auf- bzw. entladen. Bei Erreichen eines Schwellwertes am Ausgang der Integratorstufe wird über einen Schmitt-Trigger ein MUTE-Signal erzeugt, welches die Regelschleife für die PLL-Schaltung schließt. Bei Erreichen eines anderen Schwellwertes wird über den Schmitt-Trigger die Regelschleife wieder geöffnet, so daß sich das Rechtecksignal auf eine stabile Frequenz einstellt.

Der Erfindung liegt die Aufgabe zugrunde, bei verrauschtem oder nicht vorhandenem Fernsehsignal ein jitterfreies Bild auf dem Fernsehschirm zu erzeugen, so daß ein on-screen-display auf dem Bildschirm möglich ist und bei Erscheinen eines Fernsehsignals dieses sofort erkannt wird, um die PLL-Schleife und damit das horizontale Rechtecksignal zu synchronisieren. Diese Aufgabe wird durch die im Patentanspruch angegebene Maßnahme gelöst. Weitere Ausgestaltungen der Erfindung ergeben sich aus den Unteransprüchen.

Nachstehend wird die Schaltungsanordnung an einem Ausführungsbeispiel mit Hilfe der Zeichnung beschrieben.
- Figur 1: zeigt ein Blockschaltbild der Erfindung
- Figur 2: und
- Figur 3: zeigen Zeitdiagramme zur Erläuterung der Wirkungsweise der Erfindung.

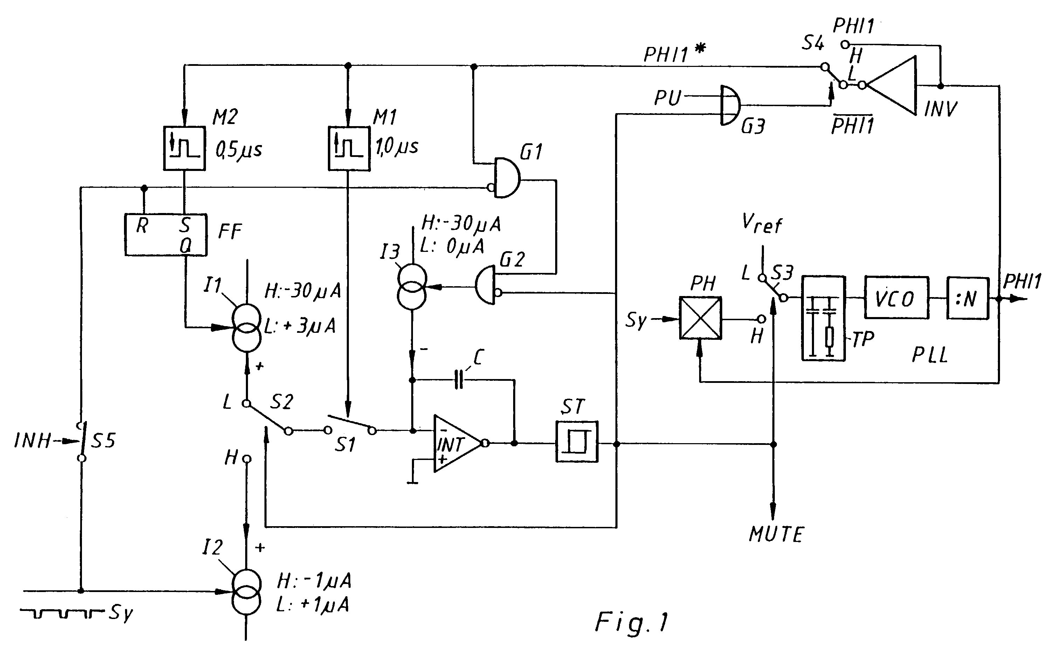

Zunächst wird der nach dem Stand der Technik arbeitende Teil der Schaltungsanordnung der Figur 1 beschrieben. Dieser Teil weist identische funktionelle Merkmale auf zur folgender Entgegenhaltung: IEEE Transactions on Consumer Electronics, Band 35, Nr.3, August 1989, IEEE; Y. Baba et al.: "A new multistandard video processor including deflection drive circuits which is controlled by digital process", Seiten 308-313. Eine PLL-Schaltung PLL, bestehend aus einem spannungsgesteuerten Oszillator VCO, einem Frequenzteiler N und einer Phasenvergleichsstufe PH mit angeschlossenem Tiefpaß TP zur Erzeugung einer Regelspannung für den spannungsgesteuerten Oszillator VCO erzeugt in bekannter Weise das horizontalfrequente symmetrische Rechtecksignal PHI1 und somit auch PHI1^{*}. Dieses Signal PHI1^{*} wird mit den Synchronimpulsen Sy des Fernsehsignals in ihrer Phase verglichen und seine Frequenz so lange verändert, bis z.E. die positive Flanke dieses Signals in die Mitte der Synchronimpulse Sy fällt. In diesem synchronen Zustand ist das von einem Schmitt-Trigger ST gelieferte Signal auf HIGH-Potential, so daß die Regelschleife der PLL-Schaltung über den Kontakt H des Umschalters S3 geschlossen ist. Bei einem zu schwachen oder verrauschtem Fernsehsignal liefert der Schmitt-Trigger ST das

Signal LOW, so daß der Umschalter S3 den Regeleingang des spannungsgesteuerten Oszillators VCO auf eine feste Referenzspannung Vref legt, die den Oszillator auf die genormte Ablenkfrequenz (z.B. 15625 Hz) bringt. Der Schmitt-Trigger ST gibt erst dann eine hohe Spannung HIGH ab, wenn eine vor diesen geschaltete Integratorstufe INT einen durch die Hysterese des Schmitt-Triggers ST bedingte obere Spannung U_{H} abgibt, wodurch die Regelschleife der PLL-Schaltung geschlossen wird. An den Eingang der Integratorstufe INT werden durch die Synchronimpulse Sy gesteuerte Ströme einer Konstantstromquelle I2 über einen zeitlich gesteuerten Schalter S1 gelegt. Der Schalter S1 wird kurzzeitig z.B. für die Dauer von 1 usec geschlossen, z.B. durch einen entsprechenden Impuls aus einer monostabilen Kippstufe M1, die von der positiven Flanke des horizontalfrequenten Rechtecksignals PHI1^{*} getriggert wird. Die Konstantstromquelle I2 liefert in Abhängigkeit von dem Potential am Steuereingang zwei gleiche Ströme entgegengesetzter Richtung, z.B. von plus oder minus 1 uAmpere . Im Beispiel soll die Konstantstromquelle I2 einen positiven Strom liefern, wenn ein Synchronimpuls Sy vorhanden ist und umgekehrt. Fallen die Synchronimpulse in die korrekte PHI1^{*}-Flanke, erhöht sich z.B. bei einer Integratorkapazität C des Integrators INT von 7 pF die Ausgangsspannung jeweils um 0,14 Volt, bis die obere Triggerschwelle V_{H} des Schmitt-Triggers ST erreicht ist. Andernfalls schaltet die Konstantstromquelle I2 auf einen Strom entgegengesetzter Polarität um, so daß die Ausgangsspannung der Integratorstufe INT um gleiche Beträge von 0,14 Volt abnimmt bis die untere Triggerschwelle V_{L} des Schmitt-Triggers ST erreicht ist.

Im asynchronen Zustand der Schaltungsanordnung, in welchem noch kein gültiger Synchronimpuls erkannt wurde, liegt das MUTE-Potential auf LOW. Es besteht die Forderung, daß ein Fernsehsignal im Suchbetrieb mit Sicherheit erkannt wird. Hierzu wird der nachfolgend beschriebene Schaltungsteil verwendet, der die durch die Patentansprüche gekennzeichneten Merkmale besitzt.

Im Suchbetrieb wird die Tatsache ausgenutzt, daß die Frequenz der Synchronimpulse Sy eines gültigen Fernsehsignals innerhalb einer bestimmten Toleranz bei der Normfrequenz liegen muß. Das heißt aber, daß eine Mindestanzahl von aufeinanderfolgenden Synchronimpulsen immer in eine bestimmte Phasenlage des PHI1-bzw. des PHI1^{*}- Signals fällt.

Für den Suchbetrieb wird die Konstantstromquelle I2 abgeschaltet und statt dessen eine andere Konstantstromquelle I1 an den Eingang der Integratorstufe INT gelegt. Die Umschaltung geschieht über einen Umschalter S2, der durch das Ausgangssignal des Schmitt-Triggers ST gesteuert wird. Diese Konstantstromquelle I1 liefert in Abhängigkeit eines Signals an ihrem Steuereingang zwei verschiedene Ströme, z.B. +3 µAmpere und -30 µAmpere. Die +3 µAmpere laden die Integratorstufe INT bei jedem Schließen des Kontaktes S1 um jeweils 0,42 Volt auf. Der negative Strom von - 30 uAmpere entlädt die Integratorstufe INT sehr schnell. Während des Suchens müssen zwei Bedingungen erfüllt sein, um die Konstantstromquelle I1 während der Zeitdauer des geschlossenen Schalters S1 auf einen positiven Strom von 3 uAmpere zu schalten. Erstens muß der Synchronimpuls Sy in eine bestimmte Phase des PHI1^{*}-Signals fallen, z.B. wenn dieses auf LOW steht und es darf kein Impuls in die andere Phase des PHI1^{*}-Signals fallen. Die Konstantstromquelle I1 wird auf den hohen negativen Strom von - 30 µAmpere geschaltet, wenn die negative Flanke des PHI1^{*}-Signals über eine monostabile Kippstufe M2 eine bistabile Kippstufe FF setzt. Es muß jetzt während der folgenden LOW-Phase des PHI1^{*}-Signals ein Synchronimpuls Sy an den Rücksetzeingang R der bistabilen Kippstufe FF gelangen, damit sein Q-Ausgang wieder auf LOW-Potential geht wodurch die Konstantstromquelle I1 auf den positiven Strom von 3 uAmpere geschaltet wird. Der anschließend auftretende Impuls aus der monostabilen Kippstufe M1, der den Schalter S1 betätigt, legt diesen eingestellten Strom an den Eingang der Integratorstufe INT. Die Konstantstromquelle I1 liefert also einen positiven Strom von 3 µAmpere, wenn die Schaltungsanordnung einen Synchronimpuls Sy erkannt hat. Dieser Vorgang muß jedoch mehrere Male hintereinander erfolgen, z.B. 10 Mal, damit die Schmitt-Trigger-Schwelle überschritten wird.

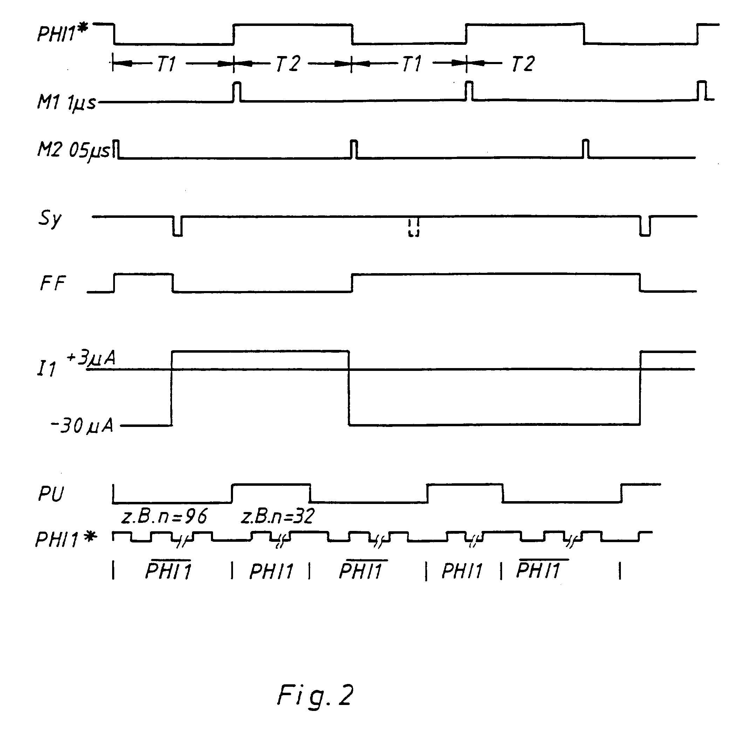

In Figur 2 ist das Signal PHI1^{*} aufgetragen. Die positive Flanke dieses Signals triggert die monostabile Kippstufe M1, die einen Impuls mit der Dauer von z.B. 1 usec. abgibt, der den Schalter S1 schließt. Die negative Flanke des PHI1^{*}-Signals triggert die monostabile Kippstufe M2, die einen Impuls mit der Dauer von z.B. 0,5 µsec. abgibt, der die bistabile Kippstufe FF setzt. Synchronimpulse Sy setzen die bistabile Kippstufe FF jeweils zurück. Man erkennt, daß der zweite gestrichelt eingezeichnete Synchronimpuls fehlt. Deshalb ist die bistabile Kippstufe FF zum Zeitpunkt des Auftretens des 1-µsec-Impulses nicht zurückgesetzt. Die Ausgangsspannung der bistabilen Kippstufe bestimmt die Größe und die Richtung des Stroms der Konstantstromquelle I1. Zu dem genannten Zeitpunkt ist die Stromquelle I1 auf einen Strom von minus 30 µAmpere geschaltet, so daß die Integratorstufe INT zurückgesetzt wird.

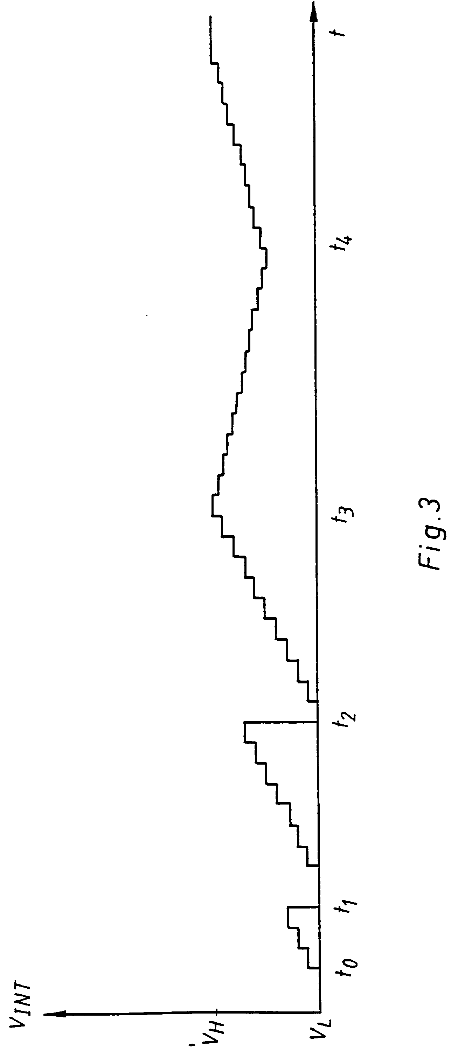

In Figur 3 ist das zeitliche Diagramm für die verschiedenen auftretenden Fälle dargestellt. Zum Zeitpunkt t0 soll ein erster gültiger Synchronimpuls Sy erkannt worden sein. Die Spannung V_{INT} an der Integratorstufe wird um 0,42 Volt erhöht. Es erfolgen weitere stufenweise Erhöhungen der Ausgangsspannung, wenn ein gültiger Synchronimpuls eintrifft. Zum Zeitpunkt t1 sei ein ungültiger Impuls in die verbotene Phase des PHI1^{*}-Signals gelangt. Dadurch entsteht über das Gatter G1 in Verknüpfung mit dem positiven PHI1^{*}-Signal an dessen Ausgang ein H-Signal, welches über ein zweites Gatter G2 ein H-Signal erzeugt, weil sein anderer Eingang durch das L-Signal durchgeschaltet ist. Dieses H-Signal am Ausgang des Gatters G2 schaltet die Konstantstromquelle I3 ein, die die Integratorstufe INT schlagartig entlädt und somit zurücksetzt. Der Suchvorgang wiederholt sich, so daß einmal während der nachfolgenden Zeit die Integratorstufe INT weiter aufgeladen wird. Aber zum Zeitpunkt t2 wird auch dieser Vorgang wieder unterbrochen, weil z.B. der Synchronimpuls Sy während der Dauer T1 fehlt, wodurch die bistabile Kippstufe FF nicht zurückgesetzt wurde. Dadurch ist die Konstantstromquelle I1 auf minus 30 µAmpere geschaltet, so daß die Integratorstufe sofort zurückgesetzt wird. Von nun ab setzt der Suchvorgang erneut ein, bis zum Zeitpunkt t3 die obere Schwelle V_{H} des Schmitt-Triggers ST erreicht wird, so daß dessen Ausgang auf H geht. Dies hat zur Folge, daß nun der Umschalter S3 die Regelschleife für die PLL-Schaltung schließt. Der Umschalter S2 legt die Konstantstromquelle I2 an. Vom Zeitpunkt t3 setzt die bekannte Regelung ein. Es ist jetzt zwar erkannt, daß es sich um ein Fernsehsignal handelt, jedoch ist das PHI1-Signal noch nicht in Phase mit den Synchronimpulsen. Deshalb wird die Integratorstufe INT über die Konstantstromquelle I2 so lange schrittweise entladen, bis die PLL-Schaltung einrastet, was zum Zeitpunkt t4 der Fall ist, worauf die Integratorstufe INT wieder schrittweise ihre Ausgangsspannung erhöht. Durch die vorhandene Hysterese des Schmitt-Triggers ST bleibt während dieses Vorgangs die Konstantstromquelle I2 angeschaltet und die Regelschleife geschlossen.

Es kann vorkommen, daß die Synchronimpulse Sy von Beginn des Suchvorgangs ab in die falsche Phasenlage des PHI1^{*}-Signals fallen. Damit es nicht zu lange dauert, bis die Synchronimpulse Sy einmal in die richtige Phase fallen, wenn das PHI1-Signal nahezu die Normfrequenz besitzt, ist eine periodische Umschaltung dieses Signals vorgesehen. Besitzt das PHI1-Signal genau die Normfrequenz, könnte der Suchvorgang ohne diese Umschaltung sogar ewig dauern. Die beiden letzten Zeilen der Figur 2 zeigen die Phasenumschaltung des PHI1-Signals. Man erkennt, daß das invertierte PHI1-Signal für eine längere Zeitdauer auf PHI1^{*} durchgeschaltet ist als das nicht invertierte PHI1-Signal.

Nur während des Suchvorgangs ist deshalb über ein Gatter G3 ein Phasenumschaltsignal PU angelegt, welches das PHI1-Signal einmal direkt durchschaltet oder über eine Inverterstufe INV um 180° dreht. Das Phasenumschaltsignal sollte dabei unsymmetrisch sein, d.h. sein Tastverhältnis sollte nicht 0,5 sein, weil sonst das Problem auftritt, daß bei Vorliegen einer nahezu normgerechten Frequenz des Sy-Signals die Phasenumschaltung eventuell den Synchronimpuls immer in die gleiche Phasenlage des PHI1-Signals schaltet und somit die Schaltung zum Erkennen des Synchronsignals sehr lange Zeit benötigt oder es zu einer Erkennung gar nicht kommen kann. Nach jeder Phasenumschaltung durch das PU-Signal muß gewährleistet sein, daß die Integratorstufe INT von neuem anfängt zu integrieren bzw. gültige Impulse zu zählen. Hierzu dient ein Signal INH, welches für kurze Zeit den Schalter S5 öffnet, um zwangsweise die Rücksetzung der bistabilen Kippstufe FF zu verhindern, wodurch die Konstantstromquelle auf den großen Entladestrom von minus 30 uAmpere gehalten bleibt.

Wenn die beschriebene Schaltungsanordnung in integrierter Schaltungstechnik auf dem gleichen Chip angeordnet ist, kann die Struktur derart ausgebildet sein, daß durch Toleranzen bedingte Veränderungen einzelner Bauteile durch gegenläufige Auswirkungen der Veränderungen anderer Bauteile aufgefangen werden. Erhöht sich z.B. durch die Technologie bedingt der Wert der Kapazität der Integrationsstufe, so daß dieser mehr Ladung benötigt, um den Schmitt-Trigger durchzuschalten, so wird in gleichem Maße durch Erhöhung des Kapazitätswertes die Zeitkonstante der monostabilen Kippstufe M1 erhöht, so daß sich die Lademenge für die Integrationsstufe erhöht und umgekehrt. Die Zeitkonstante ist außerdem umgekehrt proportional zur Größe des Stromes aus einer Stromquelle, während der Spannungshub der Integratorstufe pro Zeitintervall proportional zur Zeitkonstante und proportional zur Größe des Stromes einer weiteren Stromquelle ist. Werden diese Stromquellen durch Stromspiegel des gleichen Typs in integrierter Schaltungstechnik gebildet, so heben sich auch hier die Auswirkungen von Stromschwankungen auf.

## Patentansprüche

1. Schaltungsanordnung zum Erkennen eines Fernsehsignals in einem Fernsehempfänger, wobei ein von einem Oszillator erzeugtes zeilenfrequentes Rechtecksignal mit Hilfe einer PLL-Schaltung auf die Synchronimpulse des Fernsehsignals synchronisiert wird sowie mit einer Einrichtung zur Umschaltung der PLL-Schaltung auf ein frequenzstabiles Rechtecksignal bei fehlenden Synchronsignalen mit Hilfe einer Integratorstufe, die in Abhängigkeit von der Koinzidenz der Synchronimpulse mit dem zeilenfrequenten Rechtecksignal von Konstantstromquellen aufgeladen oder entladen wird und die bei Erreichen eines Schwellwertes durch Ansteuerung eines Schmitt-Triggers die Regelschleiie für die PLL-Schaltung schließt, **dadurch gekennzeichnet**, daß eine überwachungseinrichtung vorgesehen ist, die während der gesamten Dauer des Suchvorgangs, d.h. während des asynchronen Zustandes des vom Oszillator erzeugten zeilenfrequenten Rechtecksignals (PHI1^{*}) die Anwesenheit eines Synchronimpulses in einer ersten Hälfte (T1) des Rechtecksignals (PHI1^{*}) und die Abwesenheit von Impulsen in einer zweiten Hälfte (T2) des Rechtecksignals (PHI1^{*}) überprüft und die bei positivem Ergebnis eine zusätzliche Stromquelle (I1) für eine vorgebbare Dauer (t) an den Eingang der Integratorstufe (INT) zur Erhöhung ihrer Ausgangsspannung um einen festen Betrag (dU) anschaltet und daß sie bei negativem Ergebnis die zusätzliche Stromquelle (I1) auf einen hohen Strom entgegengesetzter negativer Richtung umschaltet, der die Integratorstufe (INT) entlädt.

2. Schaltungsanordnung nach Anspruch 1, **dadurch gekennzeichnet**, daß die überwachungseinrichtung eine flankengesteuerte vom Rechtecksignal (PHI1^{*}) getriggerte monostabile Kippstufe (M1) besitzt, an welche der Setzeingang (S) einer bistabilen Kippstufe (FF) geschaltet ist, an deren Rücksetzeingang (R) die Synchronimpulse (Sy) geschaltet sind und deren Ausgang (Q) die umschaltbare zusätzliche Stromquelle (I1) steuert.

3. Schaltungsanordnung nach Anspruch 1, **dadurch gekennzeichnet**, daß eine weitere zusätzliche Stromquelle (I3) vorgesehen ist, die bei Anwesenheit von Impulsen während der zweiten Hälfte (T2) des Signals (PHI1^{*}) eingeschaltet wird und die Integratorstufe (INT) zurücksetzt.

4. Schaltungsanordnung nach Anspruch 3, **dadurch gekennzeichnet**, daß zur Einschaltung der weiteren zusätzlichen Stromquelle (I3) die Synchronimpulse (Sy) mit dem Signal (PHI1*) in der Weise logisch verknüpft sind, daß bei Anwesenheit der Synchronimpulse (Sy) während der zweiten Hälfte (T2) des Signals (PHI1^{*}) das Einschaltsignal für die weitere zusätzliche Stromquelle (I3) erzeugt wird.

5. Schaltungsanordnung nach Anspruch 1, **dadurch gekennzeichnet**, daß die Phasenlage des Signals (PHI1^{*}) mit Hilfe eines Umschaltsignals (PU) periodisch um 180° umgeschaltet wird.

6. Schaltungsanordnung nach Anspruch 5, **dadurch gekennzeichnet**, daß das Tastverhältnis des Umschaltsignals (PU) ungleich 0,5 ist.

7. Schaltungsanordnung nach Anspruch 6, **dadurch gekennzeichnet**, daß nach jeder Phasenumschaltung (PU) die Integratorstufe (INT) durch ein Signal (INH) zurückgesetzt wird.

8. Schaltungsanordnung nach den Ansprüchen 1, 2, 3, 4, 5, 6 oder 7, **dadurch gekennzeichnet**, daß die Integratorstufe (INT) und die monostabilen Kippstufen (M1, M2) sowie die Stromquellen (I1, I2, I3) auf einem einzigen Chip einer integrierten Schaltung angeordnet sind, und daß die monostabilen Kippstufen (M1, M2) durch Stromquellen und Kondensatoren gebildet werden, deren Aufbau dem der Stromquellen (I1, I2, I3) entspricht, so daß sich die Toleranzen der Stromquellen (I1, I2, I3) und der Integratorstufe (INT) kompensieren.

## Claims

1. Circuit arrangement for detecting a television signal in a television receiver, wherein a line frequency rectangular signal, which is produced by an oscillator, is synchronised with the synchronising pulses of the television signal with the help of a PLL circuit and also including a device for switching the PLL circuit to a frequency-stabilised rectangular signal when the synchronising signals are missing with the help of an integrator stage which is charged or discharged by constant current sources in dependence on the coincidence of the synchronising pulses with the line frequency rectangular signal and which closes the control loop for the PLL circuit by controlling a Schmitt trigger when a threshold value is reached, characterised in that, there is provided a monitoring device which checks for the presence of a synchronising pulse in a first half (T1) of the rectangular signal (PHI1^{*}) and for the absence of pulses in a second half (T2) of the rectangular signal (PHI1^{*}) throughout the total duration of the search process, i.e. during the asynchronous state of the line frequency rectangular signal (PHI1^{*}) produced by the oscillator, and which connects an auxiliary current source (I1) to the input of the integrator stage (INT) for a predetermined period (t) in order to increase its output voltage by a fixed amount (dU) in the case of a positive result and that it switches over the auxiliary current source (I1) to a high current of the opposite negative direction which discharges the integrator stage (INT) in the case of a negative result.

2. Circuit arrangement in accordance with Claim 1, characterised in that, the monitoring device comprises an edge-controlled monostable trigger stage (M1) which is triggered by the rectangular signal (PHI1^{*}) and to which there is connected the setting input (S) of a bistable trigger stage (FF) to whose reset input (R) the synchronising pulses (Sy) are connected and whose output (Q) controls the switchable auxiliary current source (I1).

3. Circuit arrangement in accordance with Claim 1, characterised in that, there is provided a further auxiliary current source (I3) which is switched on and resets the integrator stage (INT) in the event of the presence of pulses during the second half (T2) of the signal (PHI1^{*}).

4. Circuit arrangement in accordance with Claim 3, characterised in that, for the purposes of switching on the further auxiliary current source (I3), the synchronising pulses (Sy) are logically combined with the signal (PHI1^{*}) in a manner such that the enabling signal for the further auxiliary current source (I3) is produced in the presence of the synchronising pulses (Sy) during the second half (T2) of the signal (PHI1^{*}).

5. Circuit arrangement in accordance with Claim 1, characterised in that, the phase angle of the signal (PHI1^{*}) is periodically changed by 180° with the help of a switching signal (PU).

6. Circuit arrangement in accordance with Claim 5, characterised in that, the duty ratio of the switching signal (PU) is not equal to 0.5.

7. Circuit arrangement in accordance with Claim 6, characterised in that, the integrator stage (INT) is reset by a signal (INH) after each change of phase (PU).

8. Circuit arrangement in accordance with Claims 1, 2, 3, 4, 5, 6 or 7, characterised in that, the integrator stage (INT) and the monostable trigger stages (M1, M2) and also the current sources (I1, I2, I3) are arranged on a single chip of an integrated circuit and that the monostable trigger stages (M1, M2) are formed by current sources and capacitors whose construction corresponds to that of the current sources (I1, I2, I3) so that the tolerances of the current sources (I1, I2, I3) and of the integrator stage (INT) are thereby compensated.

## Revendications

1. Circuit pour détecter un signal vidéo dans un téléviseur où un signal rectangulaire à fréquence de ligne produit par un oscillateur, est synchronisé sur les impulsions de synchronisation du signal vidéo à l'aide d'un circuit PLL, et comportant un dispositif pour commuter ledit circuit PLL sur un signal rectangulaire à fréquence stable en l'absence de signaux de synchronisation, et ce à l'aide d'un intégrateur qui est chargé ou déchargé par l'intermédiaire de sources de courant constant en fonction de la coïncidence des impulsions de synchronisation avec le signal rectangulaire à fréquence de ligne, et qui ferme la boucle de réglage pour le circuit PLL en actionnant une bascule de Schmitt dès qu'un certain seuil est atteint, circuit tel que décrit ci-dessus **caractérisé en ce** qu'il comporte un dispositif de contrôle qui, pendant toute la durée du processus de recherche, c'est-à-dire tant que le signal rectangulaire à fréquence de ligne (PHI1^{*}) généré par l'oscillateur se trouve en situation asynchrone, vérifie la présence d'une impulsion de synchronisation dans une première partie (T1) du signal rectangulaire (PHI1^{*}) et l'absence d'impulsions dans une seconde partie (T2) du signal rectangulaire (PHI1^{*}), et qui, lorsque le résultat du contrôle s'avère positif, connecte une source de courant supplémentaire (I1) à l'entrée de l'intégrateur (INT), pour une durée prédéfinie (t), afin d'augmenter sa tension de sortie d'une valeur définie (dU), tandis qu'en présence d'un résultat négatif, ledit dispositif de contrôle effectue une commutation de la source de courant supplémentaire (I1), faisant que celle-ci fournit un courant de haute intensité de polarité inversée, c'est-à-dire négative, qui décharge ledit intégrateur (INT).

2. Circuit selon la revendication 1 **caractérisé en ce** que ledit dispositif de contrôle possède une bascule monostable (M1) déclenchée par le flanc d'impulsion du signal rectangulaire (PHI1^{*}), à laquelle est connectée l'entrée de commande (S) d'une bascule bistable (FF) dont l'entrée de remise à l'état initial (R) reçoit les impulsions de synchronisation (Sy) et dont la sortie (Q) commande la source de courant constant (I1) commutable.

3. Circuit selon la revendication 1 **caractérisé en ce** qu'il existe une autre source de courant supplémentaire (13) qui est enclenchée en présence d'impulsions dans la seconde partie (T2) du signal (PHI1)^{*} et qui remet l'intégrateur (INT) à son état initial.

4. Circuit selon la revendication 3 **caractérisé en ce** que, pour la mise en fonctionnement de ladite source de courant supplémentaire (13), les impulsions de synchronisation (Sy) sont liées de façon logique au signal (PHI1^{*}) de telle manière que le signal d'enclenchement de ladite source de courant supplémentaire (13) soit généré dès l'apparition des impulsions de synchronisation (Sy) dans la seconde partie (T2) du signal (PHI1^{*}).

5. Circuit selon la revendication 1 **caractérisé en ce** que la position de phase dudit signal (PHI1^{*}) est périodiquement inversée de 180° à l'aide d'un signal d'inversion (PU).

6. Circuit selon la revendication 5 **caractérisé en ce** que le taux d'impulsion du signal d'inversion (PU) est inégal à 0,5.

7. Circuit selon la revendication 6 **caractérisé en ce** qu'après chaque inversion de phase (PU), l'intégrateur (INT) est remis à son état initial par l'intermédiaire d'un signal (INH).

8. Circuit selon l'une quelconque des revendications 1, 2, 3, 4, 5, 6 ou 7 **caractérisé en ce** que ledit intégrateur (INT) et les bascules monostables (M1, M2) ainsi que les source de courant (I1, I2, I3) sont disposés sur une seule et même puce d'un circuit intégré, et que les bascules monostables (M1, M2) sont constituées par des sources de courant et des condensateurs dont la structure correspond à celle des source de courant (I1, I2, I3) de telle manière que les tolérances desdites sources de courant (I1, I2, I3) et de l'intégrateur soient compensées.
